# EUROPEAN PATENT APPLICATION

(11) **EP 2 474 824 A1**
(43) Date of publication of application: **11.07.2012**
(21) Application number: 10813795.1
(22) Date of filing: 03.09.2010
(51) Int. Cl.: G01N 21/88, G01B 11/30

(54) **ILLUMINATION/IMAGE-PICKUP SYSTEM FOR SURFACE INSPECTION AND DATA STRUCTURE**

(30) Priority: 03.09.2009 JP 2009203904
(71) Applicant: CCS Inc., Kyoto-City, Kyoto 602-8011 (JP)
(72) Inventor: MASUMURA, Shigeki, Kyoto-city Kyoto 602-8011 (JP)
(74) Representative: Müller - Hoffmann & Partner
(86) International application number: PCT/JP2010/065096
(87) International publication number: WO 2011/027848

(57) **Abstract**

In order to commonly perform image processing in a side of an image processing device even if inspection contents or valid inspection regions are changed every image data or even if an illumination/image-pickup system for surface inspection per se is changed, a data structure for image processing is constructed in a manner that valid image-pickup region data indicative of a valid image-pickup region that is valid for inspection in the captured image and image processing specifying data for specifying contents of the image processing performed on the valid image-pickup region are associated with the captured image data indicative of the captured image captured by the image-pickup device.

## Description

### Technical Field

The present invention relates to an illumination/image-pickup system for surface inspection and so forth suitably used for an inspection object etc. having a three-dimensional surface profile.

### Background Art

In the case where scratches, asperities and prints etc. on a surface of an inspection object are inspected, an illumination/image-pickup system for surface inspection (referred to as simply "system" hereinafter) including a lighting device and an image-pickup device is used. In an inspection method by this system, illumination aspects (such as an illumination angle, an illumination color and a type of an illumination fixture etc.) and image-pickup aspects (such as an image-pickup angle and a distance to a surface and a type of the image-pickup device etc.) and so forth are specified in accordance with an inspection purpose (such as presence or absence of a scratch, asperity and a print etc.) and aspects of the inspection object (such as a surface condition and a surface profile etc.) and so forth. For example, in the case where scratches of an inspection object having a mirror-like surface are inspected, there is adopted an inspection method in a manner of performing an image pickup from a direction perpendicular to the surface while applying light to the surface in a slanting direction.

Moreover, in recent years, as is known in Patent Literature 1, there has been also considered a system that is rendered to perform an image-pickup of a surface of an inspection object having a complex three-dimensional shape with an image-pickup device equipped with an illuminator while properly varying an attitude and a position of the inspection object in a state that the inspection object is movably held by such as robot arms. In this system, the surface of the inspection object is divided in advance into a plurality of regions capable of obtaining a specular reflection light image using a model and the inspection object is moved so as to be held in the position and attitude of the image-pickup and illumination preset for each of the divided regions.

Then, the image data captured in this way is received by an image processing device through transmission or via a recording medium and the received image data is subjected to appropriate image processing in accordance with the inspection method and aspects of the inspection object in order to facilitate automatic discrimination or visual discrimination.

At this time, only the image data is basically transmitted from the system to the image processing device in the conventional case (of course, although identifiers for identifying each image data and bibliographic data such as image-pickup date and time directly unrelated to the image processing may be appended in some cases). Then, in the side of the image processing device, the image data is subjected to image processing of predetermined contents specified by a program and so forth.

The reason why it may be sufficient to simply transmit the image data in this way is because the inspection object and the inspection contents have been predetermined in advance and it has been grasped in advance as to which regions of the transmitted image data should be subjected to the image processing. In other words, this is because the system and the image processing device are in an inseparable relationship so that the image processing device having one dedicated program corresponds to one system.

### Citation List

### Patent Literature

Patent Literature 1: JP2007-240434A

### Summary of Invention

### Technical Problem

However, for example, in the case where an inspection object has, e.g., a complex three-dimensional shape or various surface conditions and it is necessary to change the arrangement of the lighting fixture and the image-pickup device etc. in accordance with the inspection regions thereof so that the inspection contents and valid inspection regions are changed every image data, even if only the image data is transmitted to the side of the image processing device as in the conventional case, there arises a problem that the contents of the image processing there cannot be specified and also it cannot be determined which region should be subjected to the image processing for every image data.

Moreover, in the current configuration, it is difficult to provide an image processing device having general-purpose properties adaptable to a variety of illumination/image-pickup system for surface inspection, and it is necessary to prepare a dedicated image processing device for each system as described above.

The present invention has been made in view of the above problems, and an essential object thereof is to make it possible to perform the image processing in common in the side of the image processing device even if the inspection contents and valid inspection regions are changed every image data or the illumination/image-pickup system for surface inspection per se is altered. Solution to Problem

That is, an illumination/image-pickup system for surface inspection according to the present invention includes a lighting device for lighting an inspection object, an image-pickup device for capturing an image of the inspection object and an information processing device, wherein the information processing device includes:
a determining part specifying a valid image-pickup region valid for inspection in the captured image using a surface profile of the inspection object, position related information indicative of a relative position and an attitude of the image-pickup device to the inspection object, an image-pickup condition determined in a side of the image-pickup device and a light illuminating aspect applied to the inspection object by the lighting device as at least determination parameters, and specifying image processing contents to be performed on the valid image-pickup region, and
a data sending part sending captured image data indicative of the captured image, valid image-pickup region data indicative of the valid image-pickup region and image processing specifying data for specifying image processing contents to be performed on the valid image-pickup region to the image processing device.

In order to make an effect of the present invention further remarkable and make it possible to perform the surface inspection with good accuracy, it is preferable that, a relative position of at least one of the lighting device and the image-pickup device to the inspection object is made variable, wherein the information processing device further includes: a data storage part storing surface profile data indicative of the surface profile of the inspection object, position related information data indicative of the position related information, image-pickup condition data indicative of the image-pickup condition and light illuminating aspect data indicative of the light illuminating aspect; and a compensating part calculating an image to be captured from the position related information data, surface profile data and image-pickup condition data stored in the data storage part, and in the case where there is a difference between the calculated image and the captured image, compensating at least any of the position related information data, surface profile data and image-pickup condition data for reducing the difference.

As a specific aspect of an embodiment, the position related information includes at least a work distance that is a distance to a surface of the inspection object intersecting an image-pickup axis of the image-pickup device, and the image-pickup condition includes at least one of a camera lens parameter that is a parameter relating to a lens of the image-pickup device, a depth of field and a field of view of the image-pickup device, and the light illuminating aspect includes at least an angle of an image-pickup surface to an illuminating light axis.
In the case where contents of the surface inspection with respect to the inspection object are further included as the determination parameter, the image processing can be specified more accurately.

In addition, an image processing data structure according to the present invention is a data structure that is supplied from an illumination/image-pickup system for surface inspection including a lighting device for lighting an inspection object, an image-pickup device for capturing the inspection object and an information processing device, for use in performing an image processing in an image processing device, wherein captured image data indicative of the captured image by the image-pickup device, valid image-pickup region data indicative of a valid image-pickup region in the captured image and image processing specifying data for specifying the image processing contents to be performed on the valid image-pickup region are associated.

### Advantageous Effects of Invention

According to the present invention described above, in the side of the illumination/image-pickup system for surface inspection, the valid image-pickup region in the captured image and the image processing contents to be effected on the valid image-pickup region can be specified in addition to the captured image data so as to be transmitted to the image processing device. Therefore, the image processing can be performed in accordance with a common program in the side of the image processing device irrespective of the configuration of the illumination/image-pickup system for surface inspection. As a result, it becomes possible to promote generalization and standardization of the image processing device.

### Brief Description of Drawings

[Fig. 1] Fig. 1 is an entire schematic diagram of a surface inspection device according to one embodiment of the present invention.
[Fig. 2] Fig. 2 is a functional block diagram of information processing device in the same embodiment.
[Fig. 3] Fig. 3 is a conceptual diagram of CAD data according to an inspection object in the same embodiment.

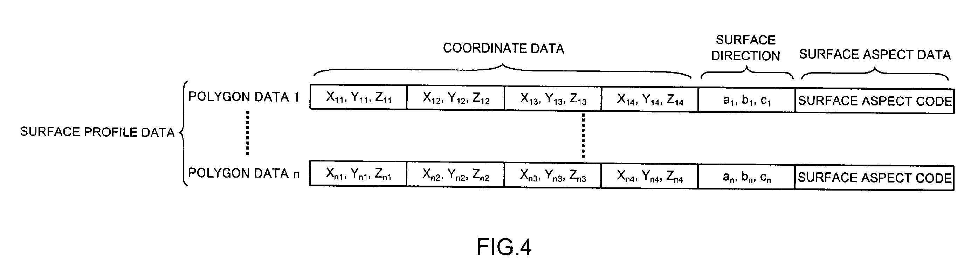

[Fig. 4] Fig. 4 is a conceptual diagram of surface profile data in the same embodiment.
[Fig. 5] Fig. 5 is a flow chart showing a data setting routine in the same embodiment.
[Fig. 6] Fig. 6 is a flow chart showing an image-pickup device adjusting routine in the same embodiment.
[Fig. 7] Fig. 7 is a flow chart showing a lighting device adjusting routine in the same embodiment.
[Fig. 8] Fig. 8 is a flow chart showing a compensating routine in the same embodiment.

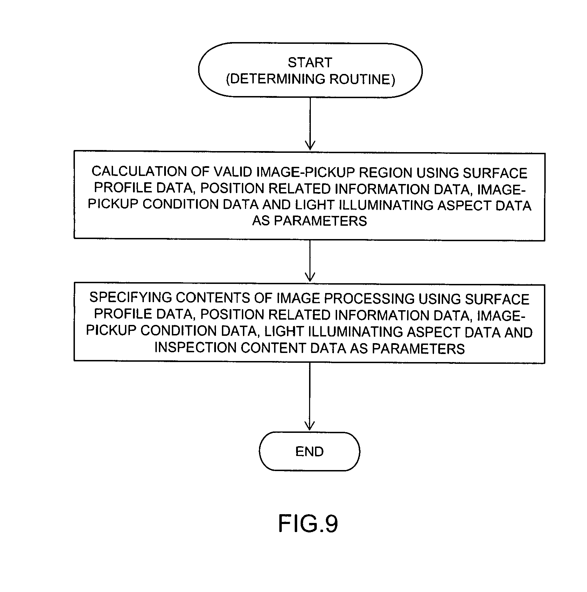

[Fig. 9] Fig. 9 is a flow chart showing a determining routine in the same embodiment.

### Description of Embodiments

One embodiment of the present invention is described below referring to the drawings.

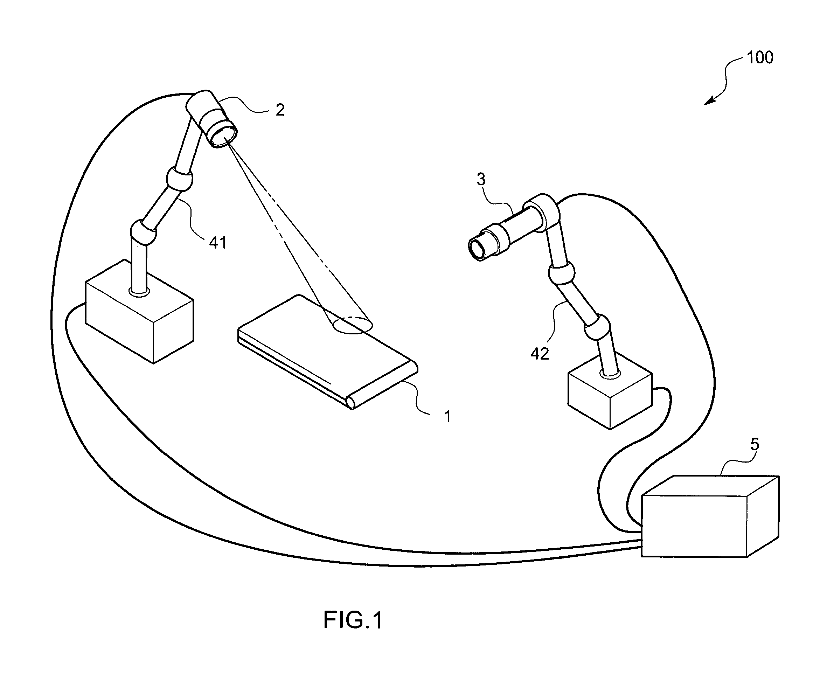

As shown in Fig. 1, an illumination/image-pickup system for surface inspection 100 according to the present embodiment includes a lighting device 2, an image-pickup device 3, robot arms 41 and 42 supporting the lighting device 2 and the image-pickup device 3 in a manner that the position and attitude thereof can be varied and an information processing device 5 so as to perform an image-pickup of an inspection object 1 while illuminating the inspection object 1 from a plurality of positions, so that a surface of a partial or entire portion of the inspection object 1 is inspected. Each of the parts will be described in detail.

The lighting device 2 uses, e.g., an LED, and although a spot-illuminating type one is used here, it is not limited to this, and ring type one or dome type one etc. may be used, and also a halogen light may be used as a light source.

The image-pickup device 3 is adapted to a so-called FA (factory automation) use, utilizing a light receiving optical system such as camera lenses and a CCD or CMOS sensor for receiving and sensing the light passed through the light receiving optical system.

The robot arms 41 and 42 support the lighting device 2 and the image-pickup device 3 and set the attitudes and positions thereof with, for example, three degrees of freedom, respectively (wherein the attitude and position are synonymous with "position" in the present invention).

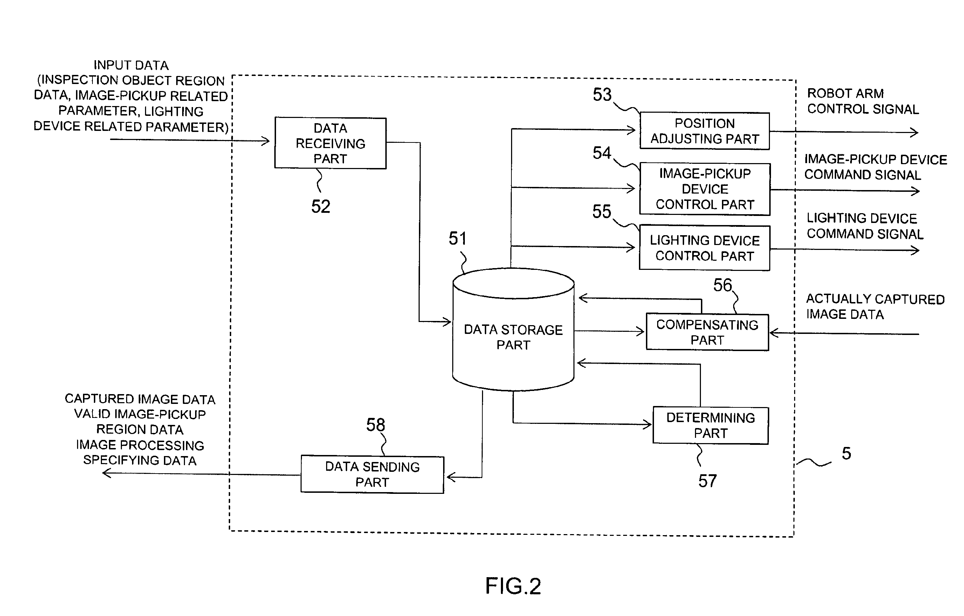

The information processing device 5 is a so-called computer including a CPU, a memory and an I/O channel etc. and the CPU and peripheral equipment thereof are cooperated in accordance with a program stored in a memory thereof so as to perform functioning as a data storage part 51, a data receipt part 52, a position adjusting part 53, an image-pickup device control part 54, a lighting device control part 55, a compensation part 56, a determination part 57, a data sending part 58 and so forth as shown in Fig. 2. Herein, the information processing device 5 as mentioned above may be independently installed or may be provided integrally with and annexed to the image-pickup device 3 or the lighting device 2 in terms of the physical viewpoint.

Next, an operation of the illumination/image-pickup system for surface inspection 100 will be described in detail together with explanation of each part of the information processing device 5.

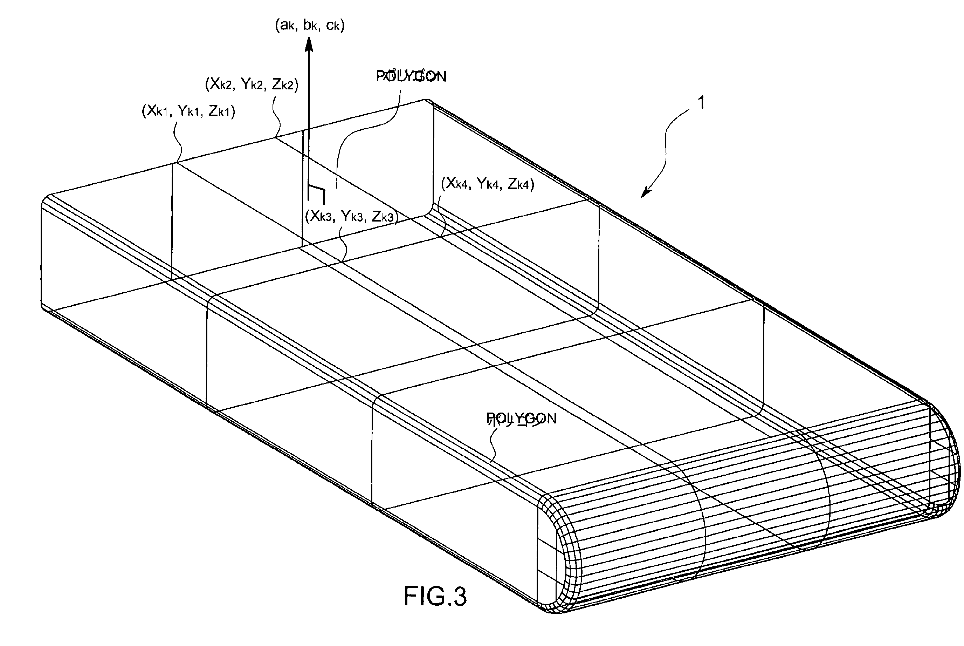

In the data storage part 51, there is stored surface profile data indicative of a surface profile of the inspection object 1. As shown in Fig. 2, the surface profile data includes a set of polygon data indicative of a polygon of such as a plane polygon (herein, e.g., quadrangle) which is a minimum unit, and coordinate data of each corner (herein, four points of the quadrangle) and vector data indicative of surface direction (normal direction to the surface) are given to each of the polygon data as shown in Fig. 3. Moreover, surface aspect data indicative of the surface aspects thereof may be coordinated with the respective polygon data. The surface aspect data means data indicative of surface roughness such as a mirror surface or a diffusing surface and a direction of a grain.

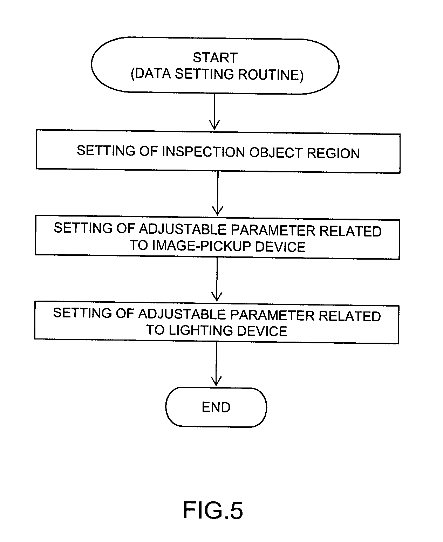

And as shown in Fig. 5, an inspection object region which is a region to be desired to be subjected to surface inspection in the inspection object is first determined by operator's input operation and so forth. In specific, for example, the inspection object region determined by the input operation etc. mentioned above is received by the data receipt part 52, and a set of polygon data existing in the inspection object region in the surface profile data is stored in the data storage part 51 as the inspection object region data.

In addition, parameters adjustable in relation to the image-pickup device 3, i.e., a distance (also referred to as "work distance") between a prescribed point of the inspection object region and the image-pickup device 3, an image-pickup angle, an image-pickup scaling factor, an aperture etc. are determined by the above input operation and so forth. In specific, for example, the parameters related to the image-pickup device determined by the input operation etc. are received by the data receipt part 52 and these parameters are stored in the data storage part 51.

Further, parameters adjustable in relation to the lighting device 2, i.e., a distance of the lighting device 2 to the inspection object region, an illuminating light angle, light quality (light emitting intensity and color of light) of the illuminating light etc. are determined by the above input operation and so forth. In specific, for example, the parameters related to the lighting device determined by the input operation etc. are received by the data receipt part 52 and these parameters are stored in the data storage part 51.
In this data storage part 51, various information such as, e.g., camera lens parameters of the image-pickup device 3 and data according to depth of field etc. are previously stored in addition to the above parameters.

Thus, the data storage part 51 stores: (1) the surface profile data indicative of the surface profile of the inspection object 1; (2) the inspection object region data indicative of the inspection object region; (3) the position related information data indicative of the position and attitude of the image-pickup device 3 with respect to the inspection object 1, i.e., data indicative of the work distance and the image-pickup angle specifying these position and attitude; (4) image-pickup condition data indicative of an image-pickup condition determined in the side of the image-pickup device 3, i.e., image-pickup scaling factor, aperture, camera lens parameter, depth of field, and solid angle of image-pickup visibility etc.; and (5) light illuminating aspect data indicative of the condition determining the light illuminating aspect to the inspection object 1 by the lighting device 2, i.e., the distance of the lighting device 2 to the inspection object region, the angle of illuminating light, the light quality of the illuminating light etc., and so forth.

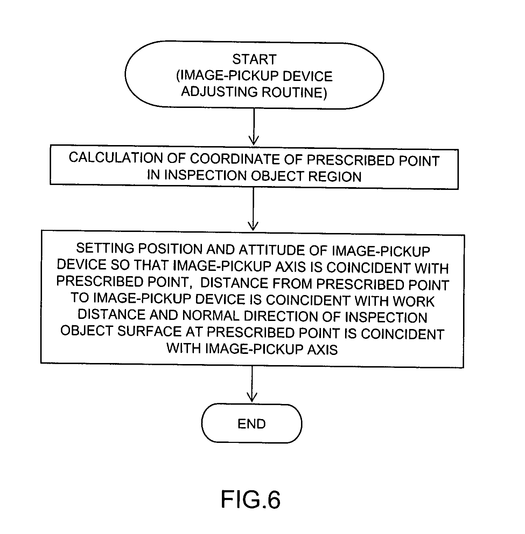

Next, as shown in Fig. 6, the position adjusting part 53 calculates the coordinate of the prescribed point (e.g., a center position) of the inspection object region referring to the surface profile data stored in the data storage part 51.

Then, the position adjusting part 53 outputs a control signal to be supplied to the robot arm 42 so as to set the relative position and the attitude with respect to the inspection object 1 of the image-pickup device 3 in a manner that, referring to the position related information data stored in the data storage part 51, an image-pickup axis is coincident with the prescribed point, the distance from the prescribed point to the image-pickup device 3 is coincident with the work distance indicative by the position related information data and that the angle defined between the normal direction at a prescribed point of the inspection object surface at the prescribed point (herein, the normal direction is specified by the polygon data including the prescribed point) and the image-pickup axis is coincident with the image-pickup angle indicative by the position related information data (herein the angle when the image-pickup axis is coincident with the normal direction, i.e., 0 degree).

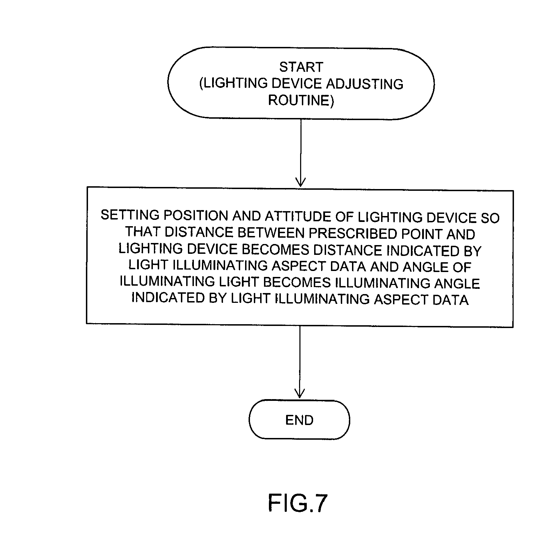

Further, as shown in Fig. 7, the position adjusting part 53 outputs a control signal to be supplied to the robot arm 41 so as to set the relative position and attitude with respect to the inspection object 1 of the lighting device 2 in a manner that, referring to the light illuminating aspect data stored in the data storage part 51, the distance between the prescribed point and the lighting device 2 becomes the distance indicated by the light illuminating aspect data and that the illumination light angle becomes the illumination angle indicated by the light illuminating aspect data.

Meanwhile, the lighting device control part 55 outputs a prescribed command signal to be supplied to the lighting device 2 so that the light emitted from the lighting device 2 is set to have a light quality and a light emitting intensity indicated by the light illuminating aspect data. Further, the image-pickup control part 54 outputs a prescribed command signal to be supplied to the image-pickup device 3 so that the image-pickup device is set to have an image-pickup scaling factor and an aperture indicated by the image-pickup condition data.

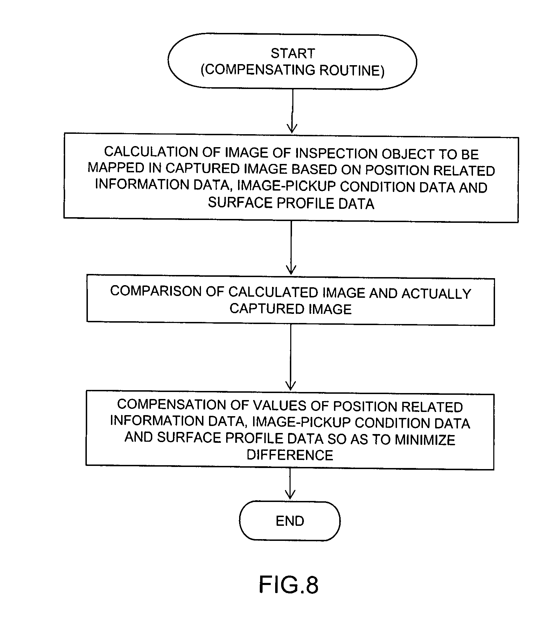

Next, as shown in Fig. 8, the compensating part 56 calculates an image of the inspection object to be mapped in the captured image based on the position related information data, the image-pickup condition data and the surface profile data stored in the data storage part 51. Then, the compensating part 56 compares the calculated image and the actually picked up captured image and compensates the parameters that determines the calculated image so as to minimize a difference obtained by the comparison, i.e., compensates the position related information data, the image-pickup condition data and the surface profile data.

In specific, the compensating part 56 compares the calculated image data and the actually captured image data referring to a singular point of the inspection object 1 such as an edge or a specified mark and so forth. And if there is a difference, a value of the position related information data or a value of a camera lens parameter indicative of such as, e.g., a lens distortion among the image-pickup condition data is compensated, and if there is an error in shape or size of the inspection object 1, the surface profile data of the inspection object region or a peripheral region thereof is compensated or the like so as to be consistent.

Then, the determining part 57 refers to the data stored in the data storage part 51 and specifies a valid image-pickup region which is valid for the inspection in the captured image using the surface profile of the inspection object 1, the work distance, the image-pickup angle, the image-pickup condition and the light illuminating aspect etc. indicated by the data as the determination parameters so as to be stored as the valid image-pickup region data in the data storage part.

As a specific method of specifying the valid image-pickup region, the following method can be exemplified. For example, a portion with a large distortion in the periphery of the captured image is specified using the camera lens parameter so as to exclude the peripheral region. Also, the peripheral portion outside the visibility is similarly removed by the solid angle of visibility. Also, for example, if it is determined based on the surface profile data that there is largely recessed into or protruded from the inspection object region from the depth of field so that the region departs from the depth of field, the region is excluded. Further, in the case where it is determined that there is a region having surface directions different larger than a prescribed value in the inspection object region in view of the surface profile data so that the angle of the light illuminated to the region exceeds an admissible range and the like, the corresponding region is excluded. Thus, the region which is determined to be improper for the inspection as an image is masked and the determining part 57 specifies the remaining region excluding the masked region as the valid image-pickup region. Then, the valid image-pickup region data indicative of the valid image-pickup region is stored in the data storage part 51.

Moreover, the determining part 57 refers to the data stored in the data storage part 51 and specifies one or more image processing contents to be performed in the side of the image processing device based on the surface profile of the valid inspection region, work distance, image-pickup angle, image-pickup condition, light illuminating aspect and inspection contents according to scratch inspection or character identification etc. indicated by the data so as to be stored as the image processing specifying data in the data storage part 51.

The image processing contents mean image processing kinds such as, e.g., binarization, brightness adjustment, extraction of color components, contrast adjustment, gamma correction, gray scaling, noise removal, blurring and so forth. As the image processing contents, adjustment parameters in each of the image processing may be added in addition to the image processing kinds. For example, in case of the binarization, a threshold value for dividing into binary becomes the adjustment parameter, and in case of the contrast adjustment, a relational expression between an input pixel value and an output pixel value becomes the adjustment parameter (herein, "pixel value" means a density or intensity of a pixel).

When such image processing contents are determined, the determining part 57 basically determines the image processing kinds referring to a corresponding table of inspection contents / image processing kinds previously stored in the memory and the like. For example, in the case where the inspection content is scratch inspection, the determining part 57 basically specifies the binarization as the image processing kind so as to determine the adjustment parameters such as a threshold value at this time based on the surface profile (including the surface aspect), image-pickup condition, light illuminating aspect and so forth. In addition to this, the brightness adjustment and contrast adjustment may be included in some cases. Moreover, in the case where the inspection content is character identification, the binarization or extraction of color components is selected as the image processing kind.
It is noted that the image processing contents may be set by an operator's input operation.

In addition, if the valid image-pickup region can not cover the inspection object region, the information processing device 5 changes the positions and attitudes of the image-pickup device 3 and the lighting device 2 one or more times so as to be able to cover the inspection object region by the valid image-pickup region contained in the captured image data every time performing the image-pickup at each position. An overlap amount of each of the valid image-pickup regions may be determined in advance.

Each captured image data thus subjected to the image-pickup is associated with the valid image-pickup region data and the image processing specifying data by the data sending part 58 so as to be transmitted to the image processing device.

Meanwhile, in the image processing device, the remaining portion other than the valid image-pickup region in the received captured image data is masked and the image in the valid image-pickup region is subjected to image processing indicated by the image processing specifying data so as to output the image on a screen or performs determination in accordance with the inspection contents in some cases, i.e., the determination of a scratch being present or absent or character identification is automatically performed.

The present embodiment configured as described above has a feature that a data structure of the captured image data associated with valid image-pickup region data and image processing specifying data is constructed in the side of the illumination/image-pickup system for surface inspection 100.

Thus, in the side of the illumination/image-pickup system for surface inspection 100, the valid image-pickup region in the captured image and the image processing contents to be effected on the valid image-pickup region can be specified in addition to the captured image data so as to be transmitted to the image processing device. Therefore, the image processing can be performed in accordance with a common program in the side of the image processing device irrespective of the configuration of the illumination/image-pickup system for surface inspection 100. As a result, it becomes possible to promote generalization and standardization of the image processing device. It is noted that the present invention is not limited to the above embodiment.

For example, it is not always necessary to send the captured image data together with the valid image-pickup region data and the image processing specifying data at the same time, and it may be possible to add a common identification in advance so as to be able to associate these pieces of data.

Moreover, the lighting device and the image-pickup device are not necessarily movable relative to the inspection object, and so long as the environment in which the data structure of the present invention is usable is set, the present invention can be adapted to any inspection equipment so as to exert an equivalent effect. In addition, the present invention can be adapted to a simple plate etc. having a two dimensional shape as an inspection object. In addition, the present invention can be modified within a range unless deviated from the essence thereof.

### Industrial Applicability

In the side of the illumination/image-pickup system for surface inspection, the valid image-pickup region in the captured image and the image processing contents to be effected on the valid image-pickup region can be specified in addition to the captured image data so as to be transmitted to the image processing device. Therefore, the image processing can be performed in accordance with a common program in the side of the image processing device irrespective of the configuration of the illumination/image-pickup system for surface inspection. As a result, it becomes possible to promote generalization and standardization of the image processing device.

### Reference Signs List

- 100: Illumination/image-pickup system for surface inspection
- 1: Inspection object
- 2: Lighting device
- 3: Image-pickup device
- 5: Information processing device

## Claims

1. An illumination/image-pickup system for surface inspection including a lighting device for lighting an inspection object, an image-pickup device for capturing an image of the inspection object and an information processing device, wherein
the information processing device comprises:
a determining part specifying a valid image-pickup region valid for inspection in the captured image using a surface profile of the inspection object, position related information indicative of a relative position and an attitude of the image-pickup device to the inspection object, an image-pickup condition determined in a side of the image-pickup device and a light illuminating aspect applied to the inspection object by the lighting device as at least determination parameters and specifying image processing contents to be performed on the valid image-pickup region, and
a data sending part sending captured image data indicative of the captured image, valid image-pickup region data indicative of the valid image-pickup region and image processing specifying data for specifying image processing contents to be performed on the valid image-pickup region to an image processing device.

2. The illumination/image-pickup system for surface inspection according to claim 1, wherein a relative position of at least one of the lighting device and the image-pickup device to the inspection object is made variable, wherein
the information processing device further comprises:
a data storage part storing surface profile data indicative of the surface profile of the inspection object, position related information data indicative of the position related information, image-pickup condition data indicative of the image-pickup condition and light illuminating aspect data indicative of the light illuminating aspect; and
a compensating part calculating an image to be captured from the position related information data, the surface profile data and the image-pickup condition data stored in the data storage part, and in the case where there is a difference between the calculated image and the captured image, compensating at least any of the position related information data, surface profile data and image-pickup condition data for reducing the difference.

3. The illumination/image-pickup system for surface inspection according to claim 1, wherein the position related information includes at least a work distance that is a distance to a surface of the inspection object intersecting an image-pickup axis of the image-pickup device, wherein
the image-pickup condition includes at least one of a camera lens parameter that is a parameter relating to a lens of the image-pickup device, a depth of field and a field of view of the image-pickup device, and wherein
the light illuminating aspect includes at least an angle of an image-pickup surface to an illuminating light axis.

4. The illumination/image-pickup system for surface inspection according to claim 1, wherein contents of the surface inspection with respect to the inspection object are further included as the determination parameter.

5. An image processing data structure that is supplied from an illumination/image-pickup system for surface inspection including a lighting device for lighting an inspection object, an image-pickup device for capturing the inspection object and an information processing device, for use in performing an image processing in an image processing device, wherein
captured image data indicative of the captured image by the image-pickup device is associated with valid image-pickup region data indicative of a valid image-pickup region that is valid for inspection in the captured image and image processing specifying data for specifying the image processing contents to be performed on the valid image-pickup region.
